# EUROPEAN PATENT SPECIFICATION

(11) **EP 3 013 712 B1**
(45) Date of publication and mention of the grant of the patent: **08.03.2017**
(21) Application number: 14731248.2
(22) Date of filing: 17.06.2014
(51) Int. Cl.: B65D 85/816

(54) **COVER FOR A BEVERAGE CAPSULE**
ABDECKUNG FÜR EINE GETRÄNKEKAPSEL
COUVERCLE POUR CAPSULE DE BOISSON

(30) Priority: 25.06.2013 EP 13173533
(43) Date of publication of application: 04.05.2016
(73) Proprietor: Nestec S.A., 1800 Vevey (CH)
(72) Inventor: HEYDEL, Christophe, Sébastien, Paul, CH-2025 Chez-le-bart (CH)
(74) Representative: Ducreux, Marie
(86) International application number: PCT/EP2014/062701
(87) International publication number: WO 2014/206814

(56) References cited:
- WO-A1-2010/063644
- WO-A1-2010/146101
- US-A1- 2010 239 717

## Description

### Field of the invention

The present invention relates to a capsule for preparing and delivering a beverage with a beverage preparation device.

### Background of the invention

The production of beverages by means of beverage capsules usually consists in introducing a diluent, preferably water, inside a capsule comprising a beverage ingredient and evacuating the beverage issued from the contact of the diluent and the ingredient from the capsule.

There exist lots of various different manners to introduce the diluent in the capsule and to evacuate the beverage from the capsule and consequently various different capsules. Usually a capsule comprises an ingredient enclosure closed by a cover. The capsules Special-T® commercialized by Nestlé comprise a cover made of an aluminum sheet. The beverage outlet in such capsules is created by piercing said aluminum sheet. WO 2010146101 describes such a capsule wherein the beverage outlet is created by creating an opening inside the cover by pushing a piercing member against said cover.

In order to identify the type of ingredient, in particular tea leaves, stored in the enclosure it would be appreciable to be able to mark the name of the ingredient on the aluminum sheet of such capsules. Yet marking by printing on an aluminum sheet presents the risk that during the preparation of a beverage with the capsule the ink enters into contact with the hot water and may cause issues like taste change, coloration of the beverage and ink may remain in the machine. Alternatively the aluminum sheet could be marked by embossing but such a process is expansive. Then the aluminum cover could be replaced by a plastic film on which the ingredient name can be easily printed. Yet a plastic film can be resistant and cannot be pierced by any piercing member of a beverage preparation machine to create a beverage outlet in the capsule.

WO 2010/063644 describes a capsule wherein the body of the capsule is closed by an upper wall. This upper wall comprises a central inlet portion and a peripheral outlet portion. The capsule is configured in the central inlet portion to provide liquid tightness between the liquid inlet and the surface of an injection needle of the beverage production device to prevent liquid from leaking from inside toward outside of the capsule.

US 2010/239717 describes a capsule with a delivery wall configured and dimensioned to include a calibrated orifice or perforating means to provide a calibrated orifice with the beverage delivery wall not being tearable against the capsule holder during extraction.

The object of the present invention is to propose a capsule in which the cover can simultaneously be efficiently pierced for creating a beverage outlet and be printed to provide information related to the capsule.

### Summary of the invention

According to a first aspect, the invention concerns a capsule for the preparation of a beverage or food in a beverage or food preparation machine comprising :
- an enclosure containing one or more beverage or food ingredient, said enclosure presenting an opening,
- a sealing cover closing the opening of the enclosure,
wherein the cover presents at least two different zones, one first zone consisting of an aluminium sheet and one second zone comprising a plastic film.

The capsule of the present invention can be configured for preparing liquid beverages like tea, coffee, milk, chocolate or more solid foods like soups, ice creams or smoothies. It comprises an enclosure for storing the beverage or food ingredients. Generally this enclosure presents a cup shaped body for holding the ingredients. The enclosure presents an opening for introducing the ingredients in the capsule at the manufacturing operation. The enclosure opening is closed by a cover that is usually sealed on the edge of the enclosure opening. The sealing can be made by heat sealing, welding or sticking.

According to the invention the cover surface presents at least two different zones, said zones differing by the nature of the cover in each zone. According to the invention the cover presents along it external surface :
- at least one first zone consisting of an aluminium sheet, and
- at least one second zone comprising a plastic film.

According to the invention :
- in the first zone the cover is made only of an aluminium sheet, and
- in the second zone the cover comprises a plastic film, said film being positioned on the external surface of the cover.

In the present invention "external" refers to elements that are placed on the outside of the capsule whereas "internal" refers to elements that are placed on the inside of the capsule.

The second zone is a laminate of a plastic film and an aluminium sheet.

The plastic film is positioned on the external part of the cover whereas the aluminium sheet is positioned on the internal part of the cover.

According to the preferred embodiment of the invention, the cover is a laminate of a plastic film and an aluminium sheet and the plastic film of said laminate is delaminated in the first zone.

According to the invention information are printed on the second zone. Preferably these information relate to the external identification of the ingredients contained in the capsule. For example these information can be the name of the ingredient or a picture of the ingredient or a particular colour.

According to the invention the second zone is a laminate of a plastic film and an aluminium sheet and the information are printed on the side of the plastic film attached to the aluminium sheet. Then the ink of the printed information does not enter into contact with the beverage preparation machine or the consumers fingers. According to this embodiment the plastic film is preferably transparent.

According to the invention the cover surface presents one first zone and one second zone. Yet cover with several first zones of the same nature and/or several second zones of the same nature can be implemented. According to a particular mode the cover can present one second zone and at least two first zones.

The invention particularly relates to a capsule comprising a wall member provided at the enclosure opening, and wherein :
- said wall member is covered by the cover,
- said wall member comprises at least one overflow aperture in fluid communication with the ingredient enclosure,
- said wall member is provided with at least one preformed channel under the cover and designed to guide a fluid from the at least one overflow aperture to at least one recess being designed to receive dedicated opening means of a beverage preparation device, and
- wherein one first zone of the cover is positioned on the cover so that the first zone is above said recess.

Preferably the cover is placed directly in contact with the wall member.

Preferably the wall member is provided with an identification member designed for being contacted from outside the capsule. In particular the identification member can comprise functional hollows and/or bulges facing the cover. According to a particular mode one first zone of the cover can be positioned above said identification member.

The invention can also concern capsule wherein the wall member is simpler - for example it is possible that it does not comprise identification member - or wherein the capsule does not comprise a wall member at all.

According to a second aspect the invention concerns a system comprising a beverage preparation device and a capsule such as described hereabove for preparing a beverage by injection of a liquid into the capsule enclosure, the beverage preparation device having an opening means which is designed to interact with a first zone of the capsule cover so as to create a beverage dispensing outlet.

Preferably the opening means of the beverage preparation device comprises an opening member having a hook-like shape designed to shear and move away at least a portion of a first zone of capsule the cover. Preferably the capsule presents at least one recess is designed to receive the dedicated opening means of the beverage preparation device.

According to a particular mode the beverage preparation device can have an identification member reading means which is designed to interact with a first zone of the cover so as to identify the capsule. Preferably the wall member comprises a wall member under the cover wherein this wall is provided with an identification member designed for being contacted from outside the capsule by the identification member reading means. In particular the identification member can comprise functional hollows and/or bulges facing the cover.

According to a third aspect the invention concerns a process for manufacturing a cover of a capsule such as described hereabove comprising the steps of:
(i) providing an aluminium layer and a plastic film layer,
(ii) printing information on a face of the plastic film layer firstly and then cutting out at least one piece of the plastic film layer corresponding to the first type of zones presenting the lowest resistance to piercing,
   or
   cutting out at least one piece of the plastic film layer corresponding to the first type of zones presenting the lowest resistance to piercing firstly and then printing information on a face of the plastic film layer,
(iii)) laminating the printed and cut plastic film on the aluminium layer.

Information are printed on the face of the plastic film layer that is laminated with the aluminium layer.

### Brief description of the drawings

The characteristics and advantages of the invention will be better understood in relation to the following figures, in which :
- Figure 1 is an exploded view of a capsule according to the state of the art,
- Figure 2 illustrates a part of a beverage preparation machine configures for cooperating with a capsule of Figure 1,
- Figure 3 is an exploded view of a capsule according to the invention,
- Figures 4a and 4c illustrates alternative covers for the capsule of Figure 4,
- Figure 4b is a section view of the cover of Figure 4a according to section AA,
- Figures 5a to 5e illustrates a process for manufacturing the cover of a capsule according to the invention.

### Detailed description of the drawings

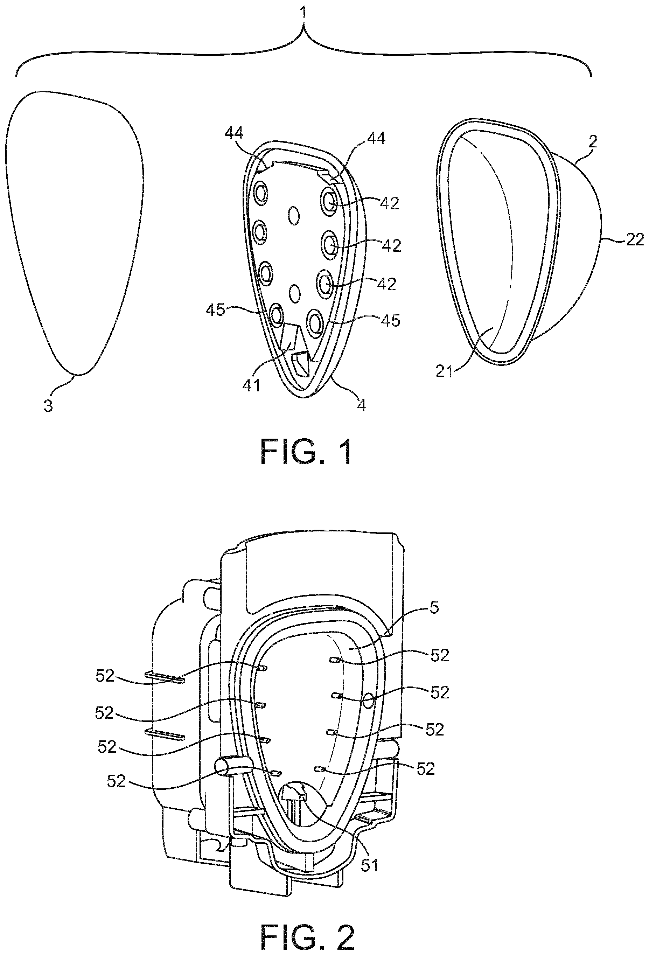

**Figure 1** illustrates the different elements of a capsule 1 according to the state of the art. The capsule 1 comprises an enclosure 2 in which beverage ingredients can be stored and presenting an opening 21 that is closed by a cover 3. In Figure 1 the capsule also comprises a wall member 4 provided at the enclosure opening 21 and covered by the cover 3. The wall member comprises two overflow apertures 44 in fluid communication with the internal part of the ingredient enclosure. These overflow apertures 44 aim at delivering the beverage from the enclosure 2 further to the introduction of a diluent - usually water - inside the enclosure through the end 22 of the enclosure opposed to the cover. The overflow is particularly interesting for the brewing of tea leaves inside the capsule as described in WO 2007/042414. According to the invention the apertures 44 in the wall member could be designed in other part of the wall member than the upper part depending on the nature of the ingredient inside the enclosure. The wall member 4 is provided with two preformed channels 45 under the cover and designed to guide the beverage from the overflow apertures 44 to a recess 41 in the wall member 4. The wall member 4 is provided with several hollows 42 that face the cover 3. In the wall member 4 illustrated in Figure 1 only four holes 42 are present on the right side of said member yet four other holes can be hollowed in the wall member 4 on the left side of said member. These holes or this absence of holes create an identification code on the wall member as described in WO 2008/090122 more precisely.

**Figure 2** illustrates the part of the beverage preparation machine designed for cooperating with the capsule 1 of Figure 1 when the capsule is introduced in the machine and the beverage preparation is launched. Said part of the machine comprises a capsule engagement wall 5 that enters into contact with the capsule cover 3 as follows. The capsule is introduced in the beverage preparation machine and pressed against the capsule engagement wall 5. The capsule engagement wall 5 comprises an opening member 51 designed for cooperating with the recess 41 in the wall member of the capsule so that the cover is torn by the introduction of the opening member in the recess. This effect can be optimally obtained when the cover is made in a material like an aluminum sheet. This effect is described in WO 2010/146101 more precisely. The capsule engagement wall 5 comprises eight pins 52 too. These pins 52 are designed for cooperating with the holes 42 in the wall member of the capsule or with the absence of such hole in the wall member. The pins 52 can sense the presence or absence of holes through the cover without piercing it. They can also pierce it depending on the nature of the cover or the fineness of the pins.

Such a system of capsule and machine corresponds for example to the system commercialised under the trademark Special-T® by Nestlé. In this system the whole cover 3 is made of the same aluminium sheet.

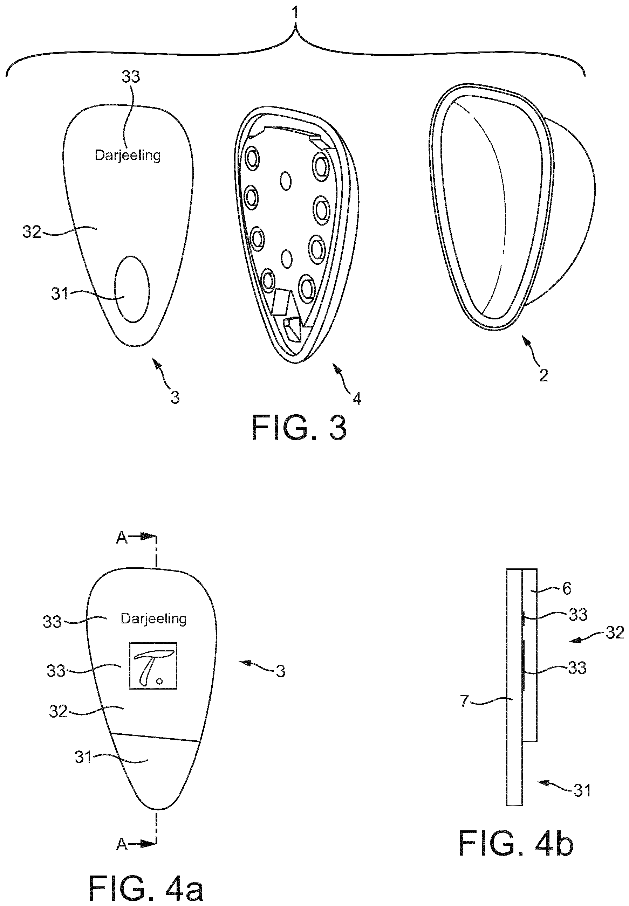

**Figure 3** is an exploded view of a capsule 1 according to the invention. The capsule presents the same components as the capsule of the prior art according to Figure 1 except that the cover 3 is not made of a uniform sheet of aluminium. In Figure 3 the cover comprises a first zone 31 made of an aluminium sheet only ; this first zone 31 presents a low resistance to piercing as in the prior and can be torn by tearing the first zone 31 when the opening means 51 of the machine enters in the recess 41 of the wall member 4 due to the pressure of the capsule against the capsule engagement wall 5. The second zone 32 of the cover is made of a plastic film. This film can be printed with a name ("Darjeeling") 33 of the ingredient in the capsule. In Figure 3 the first zone 31 extends on the part of the cover surface corresponding to the recess 41 in the wall member.

**Figure 4a** illustrates an alternative wherein the first zone 31 can be bigger than the simple surface facing the recess 41 of the wall member and corresponds to the whole lower part of the cover 3. The definition of the size and the shape of the first zone 31 can depend on the more efficient way to manufacture such a cover. In Figure 4a, the cover 3 can also support in its second zone 32 printed information about the trademark of the capsule or any other type of information.

**Figure 4b** is a section of the cover of Figure 4a : it makes apparent that the lower part of the cover - that is the first zone 31 - is made of only an aluminium sheet 7 whereas the rest of the cover - that is the second zone 32 - is a laminate of the aluminium sheet 7 and a plastic film 6 with the plastic film 6 positioned on external surface of the cover. The aluminium sheet 7 is the same for the two zones. Such a cover is issued from the lamination of a plastic film 6 on an aluminium sheet 7, a part of the plastic having been hollowed out. Information 33 are printed on the plastic film 6 and are recovered by the aluminium sheet.

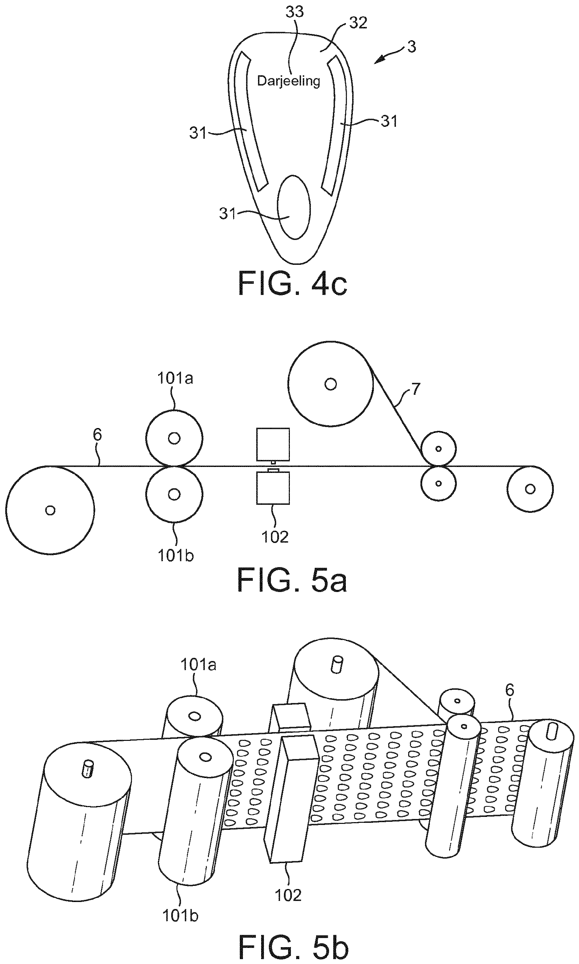

**Figure 4c** illustrates an alternative wherein the cover 3 comprises three first zones 31 one facing the recess 41 of the wall member and the others facing the part of the wall member 4 presenting holes or no holes for identifying the capsule. Depending on the type of pins 52 of the machine and the force applied by the machine in the cover during beverage preparation the identification step can be improved by reducing the resistance to piercing of the cover in these both areas.

The manufacturing of a cover presenting at least one first zone made of an aluminium sheet and the second zone is made of a printable plastic film can consist in using a laminate of a plastic film and an aluminium sheet and removing the plastic film from said laminate to create said at least one first zone.

**Figures 5a to 5e** illustrates a process for manufacturing the cover 3. Figures 5a and 5b are side view and bottom view of the manufacturing line respectively. The process uses an aluminium layer 7 and a plastic film layer 6. The aluminium layer 7 and the plastic film layer 6 are in the form of a continuous web, provided as rolls of material of a particular width. This is particularly advantageous in that techniques for the handling of such rolls, and the design of machines to do so, are well known from such arts as printing and paper-making. However, the method of the present invention may be easily adapted for use with substrates in other forms, for instance sheets, plates or the like.

The plastic film layer is passed to the printing rollers 101 a, 101 b for printing information on the plastic film layer for each capsule cover 3 to be prepared from the plastic film.

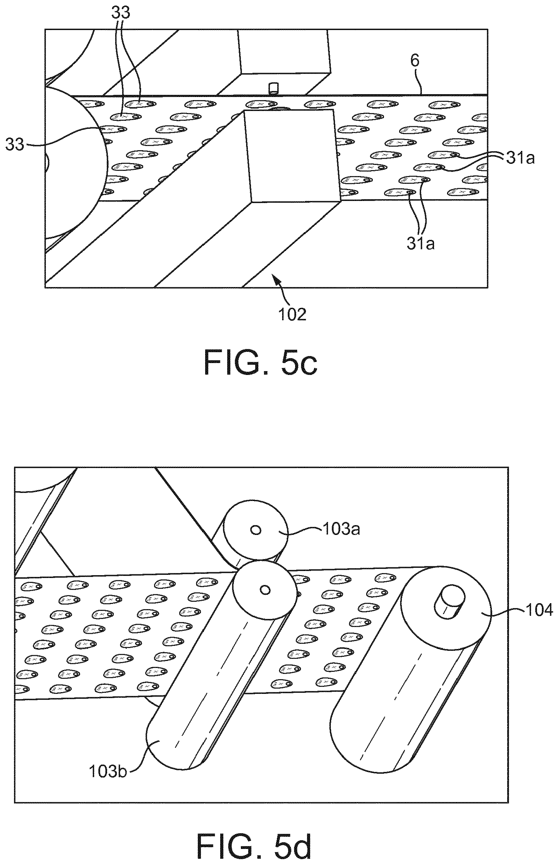

Then the printed plastic film layer 6 is brought to the cutting apparatus 102 for cutting out the zone corresponding to the first zone in the covers as illustrated in Figure 5c. The cutting apparatus is configured for cutting out in each portion of plastic film defined to form a cover 3 a part of the plastic film corresponding to the first zone 31 of the cover. The cutting apparatus can implement an array of cutting lasers or a die cutting apparatus, for instance in the form of a roller or press disposed against the plastic film 6.

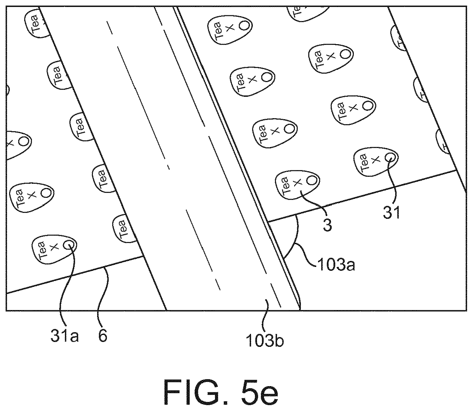

From the cutting apparatus 102 the printed and cut out plastic film layer 6 is joined to the aluminium layer 7 through the collimating rollers 103a and 103b as illustrated in Figures 5d and 5e. The collimating rollers 103a and 103b press the printed and cut out plastic film layer 6 and the aluminium layer 7 together, bringing them in contact with each other. As the both layers are pulled through the collimating rollers, the pressure applied by the collimating rollers creates a tension on the layers, eliminating air bubbles, wrinkles, and other defects. The layers are thus brought into correct position relative to each other. The collimating rollers further serve to attach the both layers. The plastic film layer 6 or the aluminium layer comprises a heat or pressure sensitive adhesive on the face put into contact with the other by the collimating rollers. Due to the pressure applied by the rollers or the heat of these rollers the both layers are attached one to the other. At the output of the collimating rollers 103a, 103b a film of covers 3 is obtained. Each cover presents a zone printed with information 33 and a first zone made of only an aluminium sheet 31.The attached layers are then wound about the take-up roller 104.

In the above manufacturing process the printing operation is realised on the side of the plastic film layer 6 that is going to be attached and recovered by the aluminium sheet layer 7 during the collimating step. Consequently the ink printed area is covered by aluminium and there is no risk that this area may contact the internal parts of the beverage preparation machine. Then the plastic film layer is preferably transparent. Otherwise the printed information are not visible.

The present invention provides capsules presenting covers that can be printed and remain easily pierceable.

The present invention proposes a simple solution for producing a capsule cover presenting zones of different natures.

## Claims

1. Capsule (1) for the preparation of a beverage or food in a beverage or food preparation machine comprising :
- an enclosure (2) containing one or more beverage or food ingredients, said enclosure presenting an opening (21),
- a sealing cover (3) closing the opening of the enclosure,
wherein the cover (3) presents along its external surface at least two different zones, one first zone consisting of an aluminium sheet and one second zone comprising a plastic film,
said capsule being **characterized in that** information are printed on the second zone, and
the second zone is a laminate of a plastic film and an aluminium sheet and the information are printed on the side of the plastic film attached to the aluminium sheet.

2. Capsule according to any one of the precedent claims wherein the plastic film is transparent.

3. Capsule according to any one of the precedent claims wherein the cover presents one second zone and at least two first zones.

4. Capsule according to any one of the precedent claims wherein said capsule comprises a wall member provided at the enclosure opening, wherein :
- said wall member is covered by/under the cover,
- said wall member comprises at least one overflow aperture in fluid communication with the ingredient enclosure,
- said wall member being provided with at least one preformed channel under the cover and designed to guide a fluid from the at least one overflow aperture to at least one recess being designed to receive dedicated opening means of a beverage preparation device, and
- one first zone of the cover is positioned above said recess.

5. Capsule according to the precedent claim wherein the wall member is provided with an identification member designed for being contacted from outside.

6. Capsule according to the precedent claim wherein the identification member comprises functional hollows and/or bulges facing the cover.

7. Capsule according to Claim 6 wherein one first zone of the cover is positioned above said identification member.

8. A system comprising a beverage preparation device and a capsule according to any one of Claims 1 to 7 for preparing a beverage by injection of a liquid into the capsule enclosure, the beverage preparation device having an opening means which is designed to interact with the first zone of the cover so as to create a beverage dispensing outlet.

9. A system according to Claim 8 wherein the opening means comprises an opening member having a hook-like shape designed to shear and move away at least a portion of the first zone of cover.

10. A system according to Claim 8 or 9 wherein the beverage preparation device has an identification member reading means which is designed to interact with one first zone of the cover to pierce the cover so as to identify the capsule.

11. Process of manufacturing a cover of a capsule according to any one of Claims 1 to 7 comprising the steps of:
(i) providing an aluminium layer and a plastic film layer,
(ii) printing information on a face of the plastic film layer and then cutting out at least one piece of the plastic film layer corresponding to the first type of zones presenting the lowest resistance to piercing,
or
cutting out at least one piece of the plastic film layer corresponding to the first type of zones presenting the lowest resistance to piercing and then printing information on a face of the plastic film layer,
(iii) laminating the cut and printed plastic film layer on the aluminium layer.

12. Process according to Claim 11 wherein the printed plastic film layer is laminated to the aluminium layer through its printed face.

## Patentansprüche

1. Kapsel (1) zur Zubereitung eines Getränks oder Nahrungsmittels in einer Getränke- oder Nahrungsmittelzubereitungsmaschine, umfassend:
- einen Behälter (2), der eine oder mehrere Getränke- oder Nahrungsmittelzutaten enthält, wobei der Behälter eine Öffnung (21) aufweist,
- eine dichtende Abdeckung (3), die die Öffnung des Behälters schließt,
wobei die Abdeckung (3) entlang ihrer Außenoberfläche mindestens zwei verschiedene Zonen aufweist, eine erste Zone, die aus einem Aluminiumblech besteht, und eine zweite Zone, die eine Kunststofffolie umfasst,
wobei die Kapsel **dadurch gekennzeichnet ist, dass** Informationen auf die zweite Zone gedruckt sind, und
die zweite Zone ein Laminat aus einer Kunststofffolie und einem Aluminiumblech ist und die Informationen auf die Seite der Kunststofffolie gedruckt sind, die an dem Aluminiumblech angebracht ist.

2. Kapsel nach einem der vorstehenden Ansprüche, wobei die Kunststofffolie transparent ist.

3. Kapsel nach einem der vorstehenden Ansprüche, wobei die Abdeckung eine zweite Zone und mindestens zwei erste Zonen aufweist.

4. Kapsel nach einem der vorstehenden Ansprüche, wobei die Kapsel ein Wandelement umfasst, das an der Behälteröffnung bereitgestellt ist, wobei:
- das Wandelement von der Abdeckung abgedeckt wird bzw. unter der Abdeckung liegt,
- das Wandelement mindestens eine Überlauföffnung in Fluidverbindung mit dem Zutatenbehälter umfasst,
- das Wandelement mit mindestens einem vorgeformten Kanal unter der Abdeckung versehen ist und dazu ausgestaltet ist, ein Fluid von der mindestens einen Überlauföffnung zu mindestens einer Vertiefung zu leiten, die dazu ausgestaltet ist, ein spezielles Öffnungsmittel einer Getränkezubereitungsvorrichtung aufzunehmen, und
- eine erste Zone der Abdeckung über der Vertiefung angeordnet ist.

5. Kapsel nach dem vorstehenden Anspruch, wobei das Wandelement mit einem Identifikationselement versehen ist, das dazu ausgestaltet ist, von außen berührt zu werden.

6. Kapsel nach dem vorstehenden Anspruch, wobei das Identifikationselement funktionelle Einbuchtungen und/oder Wölbungen umfasst, die der Abdeckung zugewandt sind.

7. Kapsel nach Anspruch 6, wobei eine erste Zone der Abdeckung über dem Identifikationselement angeordnet ist.

8. System, umfassend eine Getränkezubereitungsvorrichtung und eine Kapsel nach einem der Ansprüche 1 bis 7 zum Zubereiten eines Getränks durch Einspritzen einer Flüssigkeit in den Kapselbehälter, wobei die Getränkezubereitungsvorrichtung ein Öffnungsmittel aufweist, das dazu ausgestaltet ist, mit der ersten Zone der Abdeckung zusammenzuwirken, um einen Getränkeabgabeauslass zu erzeugen.

9. System nach Anspruch 8, wobei das Öffnungsmittel ein Öffnungselement mit einer hakenartigen Form umfasst, das dazu ausgestaltet ist, mindestens einen Abschnitt der ersten Zone der Abdeckung abzuscheren und zu entfernen.

10. System nach Anspruch 8 oder 9, wobei die Getränkezubereitungsvorrichtung ein Identifikationselementlesemittel aufweist, das dazu ausgestaltet ist, mit einer ersten Zone der Abdeckung zusammenzuwirken, um die Abdeckung zu durchstechen, um dadurch die Kapsel zu identifizieren.

11. Verfahren zum Herstellen einer Abdeckung einer Kapsel nach einem der Ansprüche 1 bis 7, folgende Schritte umfassend:
(i) Bereitstellen einer Aluminiumschicht und einer Kunststofffolienschicht,
(ii) Drucken von Informationen auf eine Fläche der Kunststofffolienschicht und dann Ausschneiden mindestens eines Teils der Kunststofffolienschicht, der dem ersten Zonentyp entspricht, der den geringsten Durchstechwiderstand bietet,
oder
Ausschneiden mindestens eines Teils der Kunststofffolienschicht, der dem ersten Zonentyp entspricht, der den geringsten Durchstechwiderstand bietet, und dann Drucken von Informationen auf eine Fläche der Kunststofffolienschicht,
(iii) Laminieren der geschnittenen und bedruckten Kunststofffolienschicht auf die Aluminiumschicht.

12. Verfahren nach Anspruch 11, wobei die bedruckte Kunststofffolienschicht durch ihre gedruckte Fläche auf die Aluminiumschicht laminiert wird.

## Revendications

1. Capsule (1) pour la préparation d'une boisson ou d'un produit alimentaire dans une machine de préparation de boisson ou de produit alimentaire comprenant :
- une enceinte (2) contenant un ou plusieurs ingrédients de boisson ou de produit alimentaire, ladite enceinte présentant une ouverture (21),
- un couvercle d'étanchéité (3) fermant l'ouverture de l'enceinte,
dans laquelle le couvercle (3) présente, le long de sa surface externe, au moins deux zones différentes, une première zone constituée d'une feuille d'aluminium et une deuxième zone comprenant un film plastique,
ladite capsule étant **caractérisée en ce que**
des informations sont imprimées sur la deuxième zone et
la deuxième zone est un stratifié d'un film plastique et d'une feuille d'aluminium et les informations sont imprimées sur le côté du film plastique fixé à la feuille d'aluminium.

2. Capsule selon l'une quelconque des revendications précédentes, dans laquelle le film plastique est transparent.

3. Capsule selon l'une quelconque des revendications précédentes, dans laquelle le couvercle présente une deuxième zone et au moins deux premières zones.

4. Capsule selon l'une quelconque des revendications précédentes, où ladite capsule comprend un élément de paroi prévu au niveau de l'ouverture d'enceinte, dans laquelle
- ledit élément de paroi est recouvert par/sous le couvercle,
- ledit élément de paroi comprend au moins un orifice de trop-plein en communication fluidique avec l'enceinte pour ingrédient,
- ledit élément de paroi étant doté d'au moins un canal préformé sous le couvercle et conçu pour guider un fluide depuis ledit au moins un orifice de trop-plein vers au moins un évidement étant conçu pour recevoir des moyens d'ouverture dédiés d'un dispositif de préparation de boisson et
- une première zone du couvercle est positionnée au-dessus dudit évidement.

5. Capsule selon l'une quelconque des revendications précédentes, dans laquelle l'élément de paroi est doté d'un élément d'identification conçu pour être contacté depuis l'extérieur.

6. Capsule selon l'une quelconque des revendications précédentes, dans laquelle l'élément d'identification comprend des creux et/ou renflements fonctionnels faisant face au couvercle.

7. Capsule selon la revendication 6, dans laquelle une première zone du couvercle est positionnée au-dessus dudit élément d'identification.

8. Système comprenant un dispositif de préparation de boisson et une capsule selon l'une quelconque des revendications 1 à 7 pour préparer une boisson par injection d'un liquide dans l'enceinte de capsule, le dispositif de préparation de boisson ayant un moyen d'ouverture qui est conçu pour interagir avec la première zone du couvercle de manière à créer une sortie de distribution de boisson.

9. Système selon la revendication 8, dans lequel le moyen d'ouverture comprend un élément d'ouverture ayant une forme de crochet, conçu pour déchirer et retirer au moins une partie de la première zone du couvercle.

10. Système selon la revendication 8 ou 9, dans lequel le dispositif de préparation de boisson dispose d'un moyen de lecture d'élément d'identification qui est conçu pour interagir avec une première zone du couvercle afin de percer le couvercle de manière à identifier la capsule.

11. Procédé de fabrication d'un couvercle d'une capsule selon l'une quelconque des revendications 1 à 7, comprenant les étapes consistant à :
(i) fournir une couche d'aluminium et une couche de film plastique,
(ii) imprimer des informations sur une face de la couche de film plastique puis découper au moins une pièce de la couche de film plastique correspondant au premier type de zones présentant la plus faible résistance au perçage
ou
découper au moins une pièce de la couche de film plastique correspondant au premier type de zones présentant la plus faible résistance au perçage puis imprimer ensuite des informations sur une face de la couche de film plastique,
(iii) stratifier la couche de film plastique découpée et imprimée sur la couche d'aluminium.

12. Procédé selon la revendication 11, dans lequel la couche de film plastique imprimée est stratifiée sur la couche d'aluminium par le biais de sa face imprimée.
